Europäisches Patentamt

European Patent Office

Office européen des brevets

(11) Publication number: **0 491 473 A2**

# EUROPEAN PATENT APPLICATION

(21) Application number: **91310795.9**

(22) Date of filing: **22.11.91**

(51) Int. Cl.5: **H04M 1/00**, H04M 19/04

(30) Priority: **18.12.90 GB 9027318**

(43) Date of publication of application:
**24.06.92 Bulletin 92/26**

(84) Designated Contracting States:
**AT CH DE DK ES FR IT LI NL SE**

(71) Applicant: **SANGARA INDUSTRIAL CO. LTD.**
**No. 76 Pa-Shih Li**
**Tansui Chen, Taipei Hsien(TW)**

(72) Inventor: **Lee, Paul**
**2F, No. 40, Liang-Chou Street**
**Taipei City(TW)**

(74) Representative: **Barlow, Roy James et al**
**J.A. KEMP & CO. 14, South Square, Gray's Inn**
**London WC1R 5LX(GB)**

(54) **Control circuit for an electrical telephone accessory.**

(57) A control circuit (10) for an electrical telephone accessory (13) detects if the telephone receiver is on the cradle, the telephone ringer is actuated, or if the telephone receiver is lifted from the cradle. The control circuit (10) connects the electrical telephone accessory (13) to a power supply source when the telephone ringer is actuated or when the telephone receiver is lifted from the cradle.

FIG.1

EP 0 491 473 A2

The invention relates to control circuits, more particularly to a control circuit for an electrical telephone accessory.

Most telephone sets do not have provisions for sending out visible signals whenever an incoming call is received (i.e., the telephone ringer of the telephone set is actuated). This makes it difficult for a person to pinpoint the exact location of the telephone in places where lighting is insufficient.

Therefore, the objective of the present invention is to provide a control circuit for an electrical telephone accessory, such as a light bulb of a telephone status indicator, which is actuated whenever an incoming call is received or when the telephone receiver is lifted from the cradle.

Accordingly, a control circuit of the present invention comprises means for detecting if the voltage across a telephone line is an on-hook voltage signal (i.e., the telephone receiver is on the cradle), a ringing voltage signal (i.e., the telephone ringer is actuated), or a busy line voltage signal (i.e., the telephone receiver is lifted from the cradle); a power supply means; and means for electrically connecting the power supply means to the electrical telephone accessory when the voltage across the telephone line is either the ringing voltage signal or the busy line voltage signal. The connecting means includes a first transistor means electrically connecting the power supply means to the electrical telephone accessory when the first transistor means is in a conducting state, and means for actuating the first transistor means to conduct when the voltage across the telephone line is either the ringing voltage signal or the busy line voltage signal. The first transistor means includes a charging network to permit the first transistor means to conduct for a predetermined period when the voltage across the telephone line is the on-hook voltage signal. This permits continued operation of the electrical telephone accessory for a short period of time after the telephone receiver is replaced on the cradle.

Other features and advantages of the present invention will become apparent in the following detailed description of the preferred embodiment with reference to the accompanying drawings, of which:

Figure 1 is a schematic circuit diagram of the preferred embodiment of a control circuit for an electrical telephone accessory according to the present invention; and

Figure 2 is a perspective view of a housing to confine the control circuit of the present invention.

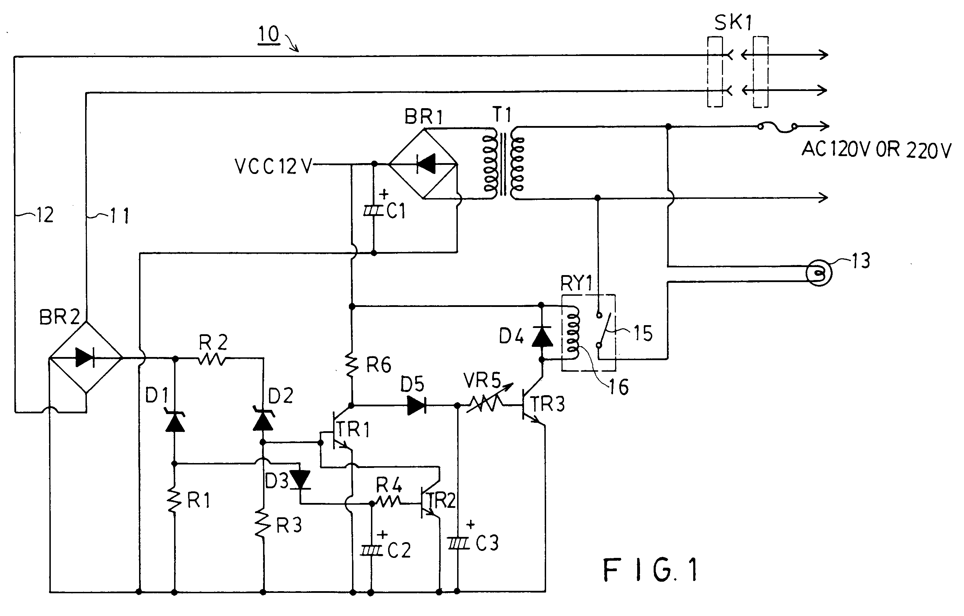

Figure 1 is a schematic circuit diagram illustrating the preferred embodiment of a control circuit (10) for an electrical telephone accessory, such as a status indicator means (13). The control circuit (10) has conducting wires (11, 12) to be connected to the telephone line. The voltage across the conducting wires (11, 12) passes through a bridge rectifier circuit (BR2). Electric power coming from a 110-volt or 220-volt electric outlet is applied to the primary winding of a transformer (T1). The secondary winding of the transformer (T1) is connected to a bridge rectifier circuit (BR1). The output of the bridge rectifier circuit (BR1) charges a capacitor (C1) to provide a dc voltage output of approximately 12 volts. A status indicator means (13), such as a light bulb, serves as the load for the control circuit (10). One terminal end of the status indicator means (13) is directly connected to the primary winding of the transformer (T1). The other terminal end of the status indicator means (13) is connected to the primary winding of the transformer (T1) via a movable contact arm (15) of a relay (RY1).

The base terminal of an NPN transistor (TR1) is connected to the bridge rectifier circuit (BR2) by means of resistors (R2, R3) and a 15-volt zener diode (D2). The base terminal of another NPN transistor (TR2) is similarly connected to the bridge rectifier circuit (BR2) by means of a 70-volt zener diode (D1), a resistor (R1), a diode (D4) and a charging network including a capacitor (C2) and a resistor (R4). The collector and emitter terminals of the transistor (TR2) are respectively connected to the base and emitter terminals of the transistor (TR1). The 12 volts dc voltage is applied to the collector terminal of the transistor (TR1) via a resistor (R6). The collector terminal of the transistor (TR1) is connected to the base terminal of a third NPN transistor (TR3) via a diode (D5) and a second charging network including a potentiometer (VR5) and a capacitor (C3). The collector terminal of the transistor (TR3) is connected to the coil (16) of the relay (RY1) and to the anode of a diode (D4) connected across the coil (16).

A voltage signal measured across the conducting wires (11, 12) and at the output of the bridge rectifier circuit (BR2) corresponds to the status of the telephone line. When the telephone receiver is on-hook, a voltage signal of approximately 40-48 volts is present across the telephone line. When the telephone ringer is actuated, a ringing voltage of approximately 90 volts is present across the telephone line. When the telephone receiver is lifted from the cradle, a busy line voltage of approximately 7 volts is present across the telephone line.

When the voltage on the telephone line is the on-hook voltage, the zener diode (D2) is in a conducting state since the voltage output of the bridge rectifier circuit (BR2) is greater than the breakdown voltage thereof. A sufficient bias voltage is generated across the base and emitter terminals of the transistor (TR1) to thereby cause it to conduct. The voltage across the collector and emitter of the transistor (TR1) is insufficient to drive the transistor (TR3) into conduction. No current flows through the coil (16) of the relay (RY1), and the movable contact arm (15) is in an open position. Power supply to the status indicator means (13) is thus cut off. No current flows through the zener diode (D1) since the on-hook voltage is less than the breakdown voltage thereof. The transistor (TR2) is thus in a non-conducting state since no bias voltage is generated at the base terminal thereof.

When the ringing voltage is present across the telephone line, the zener diode (D1) is in a conducting state since the voltage output of the bridge rectifier circuit (BR2) is greater than the breakdown voltage thereof. The capacitor (C2) is charged via the diode (D3), and a sufficient bias voltage is generated across the base and emitter terminals of the transistor (TR2) to thereby cause it to conduct. Current flowing through the zener diode (D2) passes through the collector terminal of the transistor (TR2) instead of the base terminal of the transistor (TR1). Thus, the transistor (TR1) is not conducting at this stage. When the transistor (TR1) is in the cut-off condition, the capacitor (C3) is charged via the resistor (R6) and the diode (D5). When the capacitor (C3) has been charged to a sufficient bias voltage, the transistor (TR3) starts to conduct. Current flows through the coil (16) of the relay (RY1) to energize the same and move the contact arm (15) to the closed position. Current then flows through the status indicator means (13) to cause the operation thereof. The status indicator means (13) is thus switched on when the ringing voltage is present across the telephone line.

The voltage across the telephone line is restored to the on-hook voltage if nobody lifts the telephone receiver when the telephone ringer is actuated. The capacitor (C2) discharges through the resistor (R4) and the transistor (TR2). When the voltage across the capacitor (C2) becomes insufficient to keep the transistor (TR2) in the conducting state, the transistor (TR2) returns to the cut-off condition and the transistor (TR1) begins to conduct. The capacitor (C3) discharges through the potentiometer (VR5) and the transistor (TR3) and the transistor (TR3) is eventually switched off. No current flows through the coil (16) of the relay (RY1) and the contact arm (15) moves to the open position to turn off the status indicator means (13).

When somebody lifts the telephone receiver, such as when receiving incoming calls or making outgoing calls, the voltage across the telephone line is reduced to the 7 volt busy line voltage. The transistors (TR1, TR2) are not conducting since the voltage output at the bridge rectifier (BR2) is less than the breakdown voltages of the zener diodes (D1, D2). When the capacitor (C3) has been charged to a sufficient bias voltage, the transistor (TR3) begins to conduct and current flows through the coil (16) of the relay (RY1). The contact arm (15) moves to the closed position and current flows through the status indicator means (13) to cause the operation thereof. When the telephone receiver is replaced, the on-hook voltage is once again present across the telephone line. The capacitor (C3) once more discharges to automatically turn off the transistor (TR3) and the status indicator means (13).

It is thus shown that the control circuit (10) of the present invention permits the operation of a telephone accessory, such as a status indicator, only when the telephone receiver is lifted from the cradle or when the telephone ringer is actuated.

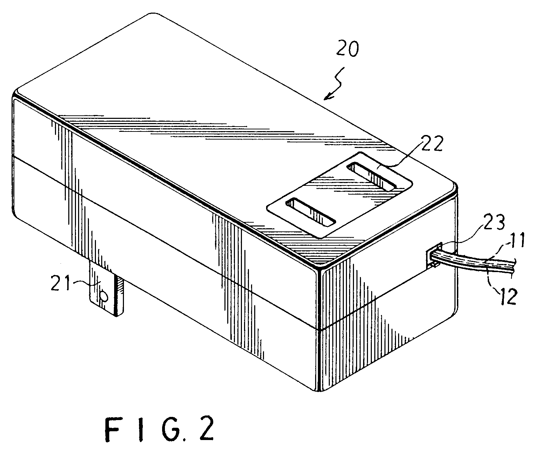

The control circuit (10) is received in a housing (20) shown in Figure 2. The housing (20) is provided with an electrical plug means (21) to serve as a means for achieving electrical connection with a conventional electrical outlet, an electrical socket (22) to serve as a means for achieving electrical connection with the telephone accessory, and an opening (23) for the conducting wires (11, 12).

The following is an electrical parts list for the control circuit 10 of the present invention:

T1:
Transformer 240/120 V primary, 10 V secondary
BR1:
50 V, 1 A Bridge Rectifier
BR2
: 400 V, 1 A Bridge Rectifier
C1:
330 micro F, 16 V
C2:
3.3 micro F, 16 V
C3:
220 micro F, 16 V
D1:
70 V zener diode 1/2 W
D2:
15 V zener diode 1/2 W
D3,
D4, D5: IN4148 diode
R1,
R3: 10 K, 1/4 W
R2,
R5: 150 K, 1/4 W
R4:
560 K, 1/4 W
R6:
3.3 K, 1/4 W
TR1, TR2, TR3:
Motorola C945 NPN transistor
RY1:
12 VDC relay

## Claims

1. A control circuit for an electrical telephone accessory, comprising:

    means for detecting if the voltage across a telephone line is an on-hook voltage signal, a ringing voltage signal, or a busy line voltage signal;

    a power supply means; and

    means for electrically connecting said power supply means to said electrical telephone accessory when the voltage across the telephone line is either said ringing voltage signal or said busy line voltage signal.

2. The control circuit as claimed in claim 1, wherein said connecting means comprises:

    a first transistor means electrically connecting said power supply means to said electrical telephone accessory when said first transistor means is in a conducting state; and

    means for actuating said first transistor means to conduct when the voltage across the telephone line is either said ringing voltage signal or said busy line voltage signal.

3. The control circuit as claimed in claim 2, wherein said actuating means comprises a second transistor means electrically connected to said detecting means and to said first transistor means, and a third transistor means electrically connected to said detecting means and to said second transistor means, said second transistor means switching off said first transistor means when the voltage across the telephone line is said on-hook voltage signal, said third transistor means switching off said second transistor means when the voltage across the telephone line is said ringing voltage signal;

    whereby, said first transistor means is conducting when said second transistor means is switched off, and said first transistor means is switched off when said second transistor means is conducting.

4. The control circuit as claimed in claim 2, wherein said first transistor means comprises a control device electrically connecting said power supply means and said electrical telephone accessory when said first transistor means is conducting.

5. The control circuit as claimed in claim 4, wherein said control device is a relay having a coil and a movable contact arm electrically connecting said power supply means to said electrical telephone accessory when current flows through said coil.

6. The control circuit as claimed in claim 2, wherein said first transistor means comprises a charging network to permit said first transistor means to conduct for a predetermined period of time when the voltage across the telephone line is said on-hook voltage signal.

7. The control circuit as claimed in claim 7, wherein said charging network comprises a capacitor and a variable potentiometer connected in series with said capacitor.

F I G. 1

EP 0 491 473 A2

F I G. 2